# EUROPEAN PATENT SPECIFICATION

(11) **EP 3 136 145 B1**
(45) Date of publication and mention of the grant of the patent: **14.07.2021**
(21) Application number: 15782719.7
(22) Date of filing: 06.04.2015
(51) Int. Cl.: G02B 6/27, G02B 6/28, H04B 10/2581, H04J 14/04

(54) **MULTICORE/MULTIMODE FIBER JOINING DEVICE**
VERBINDUNGSVORRICHTUNG FÜR MEHRADRIGE/MULTIMODALE FASER
DISPOSITIF DE COUPLAGE DE FIBRES MULTICOEUR/MULTIMODE

(30) Priority: 24.04.2014 JP 2014090704
(43) Date of publication of application: 01.03.2017
(73) Proprietor: NATIONAL INSTITUTE OF INFORMATION AND COMMUNICATIONS TECHNOLOGY, Tokyo 184-8795 (JP)
(72) Inventor: AWAJI, Yoshinari, Koganei-shi Tokyo 184-8795 (JP); KOBAYASHI, Tetsuya, Ageo-city Saitama 362-0021 (JP); TAKAHATA, Taketoshi, Ageo-city Saitama 362-0021 (JP)
(74) Representative: Pitchford, James Edward
(86) International application number: PCT/JP2015/060708
(87) International publication number: WO 2015/163124

(56) References cited:
- JP-A- 2013 182 222
- JP-A- 2013 182 222
- JP-A- 2014 503 081
- ROLAND RYF ET AL: "Mode-Division Multiplexing Over 96 km of Few-Mode Fiber Using Coherent 6 $\,\times\,$ 6 MIMO Processing", JOURNAL OF LIGHTWAVE TECHNOLOGY, IEEE SERVICE CENTER, NEW YORK, NY, US, vol. 30, no. 4, 1 February 2012 (2012-02-01), pages 521-531, XP011401949, ISSN: 0733-8724, DOI: 10.1109/JLT.2011.2174336
- TOTTORI YUSAKU ET AL: "Integrated optical connection module for 7-core multi-core fiber and 7 single mode fibers", 2013 IEEE PHOTONICS SOCIETY SUMMER TOPICAL MEETING SERIES, IEEE, 8 July 2013 (2013-07-08), pages 82-83, XP032491803, DOI: 10.1109/PHOSST.2013.6614463 [retrieved on 2013-09-27]
- ROLAND RYF ET AL: "Low-Loss Mode Coupler for Mode-Multiplexed transmission in Few-Mode Fiber", NATIONAL FIBER OPTIC ENGINEERS CONFERENCE, vol. 4510060060040, 1 January 2012 (2012-01-01), pages PDP5B.5-4230, XP055220832, Washington, D.C. DOI: 10.1364/NFOEC.2012.PDP5B.5 ISBN: 978-1-55752-935-0
- W. KLAUS ET AL.: 'Technologies for SDM optical networks' PROCEEDINGS OF THE 2014 IEICE GENERAL CONFERENCE 04 March 2014, XP008185027
- R.RYF ET AL.: 'Mode-Division Multiplexing Over 96 km of Few-Mode Fiber Using Coherent 6 x 6 MIMO Processing' LIGHTWAVE TECHNOLOGY, JOURNAL OF vol. 30, no. 4, pages 521 - 531, XP011401949
- R.RYF. ET AL.: 'Low-loss mode coupler for mode- multiplexed transmission in few-mode fiber' OPTICAL FIBER COMMUNICATION CONFERENCE AND EXPOSITION (OFC/NFOEC), 2012 AND THE NATIONAL FIBER OPTIC ENGINEERS CONFERENCE pages 1 - 3, XP055220832
- Y. TOTTORI ET AL.: 'Integrated optical connection module for 7-coremulti-core fiber and 7 single mode fibers' PHOTONICS SOCIETY SUMMER TOPICAL MEETING SERIES 2013, pages 82 - 83, XP032491803
- None

## Description

### Technical field

The present invention relates to a multi-core multi-mode fiber coupling device configured to simultaneously convert light beams in a single mode from a plurality of fibers into a higher order mode to thereby have ability to effectively couple the plurality of single mode fibers and a multi-core multi-mode fiber, and a method of coupling a plurality of optical fibers and a multi-core multi-mode fiber using such a device.

### Background art

In recent years, the limit in transmission capacity of optical fibers has become a problem, and studies on Space Division Multiplexing (SDM) are thus being intensively made in order to solve such a problem. For this reason, multi-core fibers having a plurality of cores in a single fiber, and/or multi-mode fibers capable of transmitting a plurality of propagation modes through a single core are subject to study.

In the Japanese Patent Application Laid Open No. 2013-182222 publication (the following Patent reference 1), there is a multi-core fiber coupling device disclosed. This multi-core fiber coupling device is configured to couple a plurality of single mode fibers and a multi-core fiber.

In a non-Patent reference 1, there is a technology adapted for stretching a bundle fiber in a tapered shape to couple a multi-core fiber of 7-core and single mode fibers disclosed. With this technology, a plurality of single mode fibers are bundled and stretched to implement fusion splicing to the multi-core fiber.

### Prior art reference

### Patent reference

Patent reference 1: Japanese Patent Application Laid Open No. 2013-182222 publication

### Non-patent reference

Non-patent reference 1: B. Zhu, et. al "Space-, Wavelength-, Polarization-Division Multiplexed Transmission of 56-Tb/s over a 76.8-km Seven-Core Fiber," in Optical Fiber Communication Conference, OSA Technical Digest (CD)(Optical Society of America, 2011), paper PDPB7.

Further background art is provided in a paper by R. Ryf et al. entitled "Mode-Division Multiplexing Over 96 km of Few-Mode Fiber Using Coherent 6 × 6 MIMO Processing" (Journal of Lightwave Technology, vol. 30, no. 4, pages 521-531, February 2012), which reports simultaneous transmission of six spatial and polarization modes, each carrying 40 Gb/s quadrature-phase-shift-keyed channels over 96 km of a low-differential group delay few-mode fiber. The channels are recovered by offline digital signal processing based on coherent detection and multiple-input multiple-output processing.

### Summary of the invention

### The problems to be solved by the invention

As described above, the limit in the transmission capacity of the optical fiber is considered to be a problem. For this reason, it is desirable to develop a multi-core multi-mode fiber coupling device which is able to transmit a large number of information, and to propose a multi-core multi-mode fiber coupling method using such a device.

### Means for solving the problems

The present invention is a multi-core multi-mode fiber coupling device as defined in Claim 1 of the appended claims. Also provided is a multi-core multi-mode fiber coupling method as defined in Claim 4.

The present invention is fundamentally based on the finding that outgoing light beams from a plurality of multi-core couplers are subjected to mode multiplexing using an optical coupler (optical mode combiner) so that the multi-core multi-mode fiber coupling can be made.

The present invention relates to a multi-core multi-mode fiber coupling device. This device comprises: a first group 11 of fibers, which will be hereinafter simply referred to as a first fiber group 11; a first light converging system 13, a first mode converter 15; a second group 21 of fibers, which will be hereinafter simply referred to as a second fiber group 21; a second light converging system 23; and a spatial coupling system 33 for multi-core fiber, which will be hereinafter simply referred to as a multi-core fiber spatial coupling system 33. The first mode converter 15 simultaneously implements thereat mode conversion to light beams from the first fiber group 11. The multi-core fiber spatial coupling system 33 multiplexes light beams originating from the first fiber group 11, which have been subjected to mode conversion, and light beams originating from the second fiber group 21 to transmit the light beam or beams thus obtained to a multi-core fiber 31.

The first light converging system 13 is an optical system for converging a group of outgoing light beams from the first fiber group 11. The first mode converter 15 is an optical device for converting the mode of the group of outgoing light beams from the first fiber group 11, which have been converged by means of the first light converging system 13, into a first mode. The second light converging system 23 is an optical system for converging a group of outgoing light beams from the second fiber group 21.

The multi-core fiber spatial coupling system 33 is an optical system for multiplexing the group of light beams from the first mode converter 15 and the group of light beams from the second light converging system 23 to guide the multiplexed light beam or beams into the multi-core fiber 31.

When the first mode is the base mode, respective light beams, which have been converged by means of the first light converging system 13, are passed through the first mode converter 15 which provides a distribution to allow a difference between phases adjacent in a spatial light in correspondence with the propagation mode within the optical fiber to be π (180°) to thereby have ability to perform conversion into a higher order mode. The multi-core multi-mode fiber coupling device of the present invention simultaneously implements mode conversion to a plurality of outgoing light beams from the first fiber group 11 by converging light beams into the first mode converter 15. It is preferable that the first mode converter 15 is a phase plate arranged at a position in which the group of outgoing light beams from the first fiber group 11 are allowed to coincide with each other by the first light converging system 13. This position may be also a position for realizing an optimum mode conversion efficiency as will be described later.

A more preferred example of the multi-core multi-mode fiber coupling device is a device further comprising: a third group 41 of fibers, which will be hereinafter simply referred to as a third fiber group 41; a third light converging system 43; and a second mode converter 45. The third light converging system 43 is an optical system for converging a group of outgoing light beams from the third fiber group 41. The second mode converter 45 is an optical device for performing mode conversion into a second mode of the group of outgoing light beams from the third fiber group 41, which have been converged by means of the third light converging system 43.

In the case of the above-mentioned example, the multi-core fiber spatial coupling system 33 guides the group of outgoing light beams from the first mode converter 15, the group of outgoing light beams from the second light converging system 23 and the group of outgoing light beams from the second mode converter 45, into the multi-core fiber 31.

The present invention also provides a multi-core multi-mode fiber coupling method using the above-described multi-core multi-mode fiber coupling device. This method comprises steps described below.

A group of outgoing light beams are emitted from the first fiber group 11. The group of outgoing light beams from the first fiber group 11 are converged by means of the first light converging system 13. The group of outgoing light beams from the first fiber group 11, which have been converged by means of the first light converging system 13, are subjected to mode conversion into the first mode by means of the first mode converter 15.

The group of outgoing light beams are emitted from the second fiber group 21. The group of outgoing light beams from the second fiber group 21 are converged by means of the second light converging system 23. The group of outgoing light beams from the first mode converter 15 and the group of outgoing light beams from the second light converging system 23 are guided into the multi-core fiber 31 by means of the multi-core fiber spatial coupling system 33.

### Advantageous effects

In accordance with the present invention, since multi-core multi-mode coupling device can be provided by means of a plurality of multi-core couplers and optical coupler (optical mode combiner), it is possible to realize multi-core multi-mode fiber coupling with lesser number of parts or components.

### Brief Description of Drawings

Fig. 1 is a block diagram illustrating an example of the basic configuration of a multi-core multi-mode fiber coupling device.
Fig. 2 is a view for explaining an example of a mode converter.
Fig. 3 is a block diagram illustrating a preferred example of the multi-core multi-mode fiber coupling device.

### Description of Embodiments

Preferred embodiments for carrying out the present invention will now be described with reference to the attached drawings. It is to be noted that the present invention is not limited to embodiments described below, but may include an embodiment or embodiments which has or have been modified or changed as occasion demands within the scope of the appended claims.

The present invention relates to a multi-core multi-mode fiber coupling device. The multi-core multi-mode fiber coupling device is configured to couple light beams from a plurality of light sources with a multi-core multi-mode fiber. Namely, such a device refers to a device adapted to guide light beams caused to be in a multi-mode including a plurality of higher order mode into respective cores of a multi-core fiber having a plurality of cores in a single optical fiber. There is no need for all cores included in the multi-core fiber to be used for optical information communication, but, e.g., any one of the central core and/or peripheral cores may be used for detection, and any feedback may be employed in advance as occasion demands.

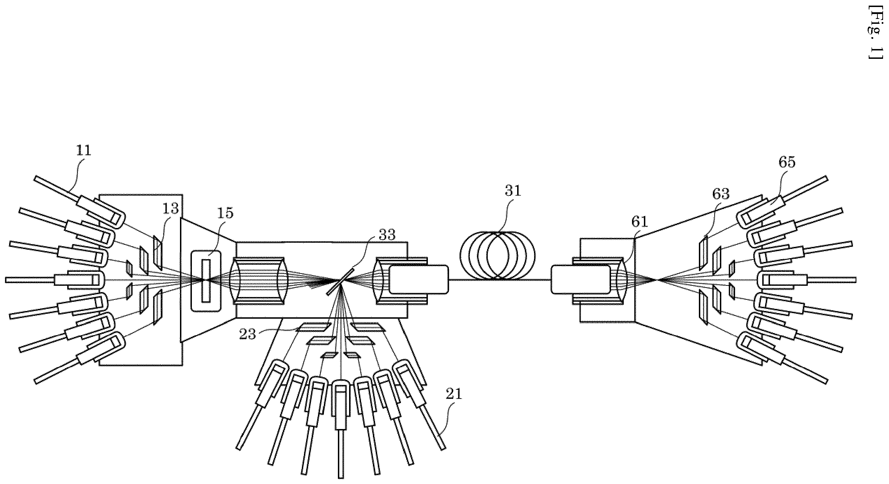

Fig. 1 is a block diagram illustrating an example of the basic configuration of a multi-core multi-mode fiber coupling device of the present invention. As illustrated in Fig. 1, this device comprises first fiber group 11, first light converging system 13, first mode converter 15, second fiber group 21, second light converging system 23, and multi-core fiber spatial coupling system 33.

The first fiber group 11 refers to a group of two optical fibers or more which are provided at positions spatially away from each other. An example of the optical fibers constituting the first fiber group is a single mode fiber.

The first light converging system 13 is an optical system for converging a group of outgoing light beams from the first fiber group 11. An example of the first light converging system 13 is a prism or a mirror for guiding a plurality of outgoing light beams from the first fiber group 11 into the first mode converter 15 (e.g., phase plate). When the first light converging system 13 is a mirror, an optical path is adjusted so that light beams from a plurality of optical fibers existing spatially away from each other arrive at a predetermined position of a wavelength plate. In this way, a plurality of light beams from the first fiber group 11 are guided to a predetermined position of the first mode converter 15 by means of the first light converging system 13. However, in the case of an arrangement which can conduct a guide to a predetermined position of the first mode converter 15 without relying on the first light converging system 13, it is not necessarily required to use the first light converging system 13.

The first mode converter 15 is an optical device for converting the mode of a group of outgoing light beams from the first fiber group 11, which have been converged by means of the first light converging system 13, into the first mode. An example of the first mode converter 15 is a phase plate. It is preferable that the first mode converter 15 is a phase plate arranged in a position where the group of outgoing light beams from the first fiber group 11 coincide with each other by means of the first light converging system 13. In the first mode converter 15, light beams included in the group of outgoing light beams from the first fiber group 11 may be simultaneously subjected to mode conversion, thereby making it possible to easily attain the multi-core multi-mode fiber coupling.

The mode converter is known as disclosed in, e.g. the Japanese Patent Application Laid Open No. 2009-047784 publication, and the Japanese Patent Application Laid Open No.2010-122688 publication. The mode converter can convert light beams of the base mode into light beams of any higher order mode. An output from the first fiber has ordinarily basic (base) mode (TEM₀₀). Light beams of the basic mode are subjected to mode conversion as occasion demands at the first mode converter 15. An example of the mode after it has undergone mode conversion is a first order mode (TEM₀₁ or TEM₁₀). Any mode (e.g., TEM₁₁ or TEM₀₂) except for the above may be used. On the other hand, it is preferable that a group of outgoing light beams from the first mode converter 15, which arrives at a multi-core multi-mode fiber, are different in the mode from any other group of light beams.

For example, when three kinds of groups of light beams are input into the multi-core multi-mode fiber, it is preferable to employ three modes of the base mode (the case where, e.g. an output from the single mode fiber is not subjected to mode conversion), TEM₀₁ and TEM₁₀. Such modes are introduced into the multi-core multi-mode fiber, and any mode may be employed if it can be separated by using known means in a multi-core multi-mode fiber of the receiving side.

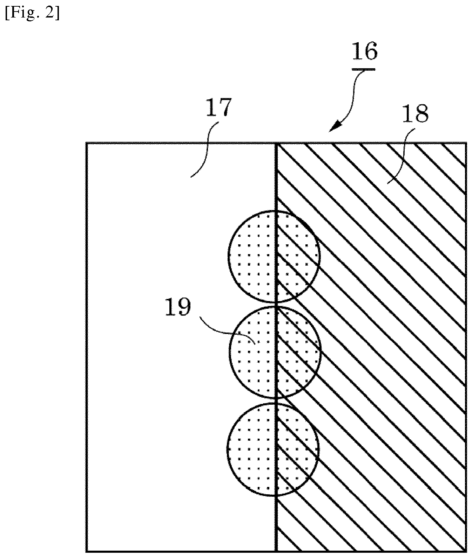

A preferred example of the multi-core multi-mode fiber coupling device is an example in which light beams are converged on a predetermined position of the first mode converter 15 by means of the first light converging system 13. Fig. 2 is a view for explaining an example of the mode converter. As illustrated in Fig. 2, this phase plate 16 indicates that there is a transparent medium having a specific refractive index in an adjacent intensity distribution in a spatial light in correspondence with the propagation mode within an optical fiber arranged, in order to allow a difference between phases of intensities adjacent in the spatial light in correspondence with the propagation mode within the optical fiber to be π (180°) to provide a physical optical path difference corresponding to a phase difference at that wavelength. In this drawing, since light beams 19, which are arranged so that they are uniformly irradiated onto respective thin and thick parts 17 and 18, have optical path lengths different from each other, mode conversion will be performed. The configuration of the mode converter is not limited to the configuration described above. However, with this method, the traveling direction of light beams in the base mode from the single mode fiber is adjusted by means of the optical system, thus making it possible to easily and simultaneously perform mode conversion of these plural light beams in the base mode.

Ordinarily, the multi-core fiber has a plurality of cores in positions symmetrical with respect to the central core. Moreover, the phase plate is such that the boundary between the thin part 17 and the thick part 18 linearly exists. In the present invention, light beams from the fiber, which have been once converged at this boundary, are guided into respective cores of the multi-core.

The second light converging system 23 is an optical system for converging a group of outgoing light beams from the second fiber group 21. In this example, such a second mode converter adapted to perform mode conversion of the mode of the group of outgoing light beams from the second fiber group 21, which have been converged by the second light converging system 23, is not indispensable. This is because it is sufficient that any light signal in the base mode is included in the multi-core multi-mode fiber. On the other hand, the mode of a group of outgoing light beams from the second fiber group 21, which have been converged by means of the second light converging system 23, may be subjected to mode change or conversion by means of the second mode converter.

The multi-core fiber spatial coupling system 33 is an optical system for guiding a group of outgoing light beams from the first mode converter 15 and a group of outgoing light beams from the second light converging system 23 into the multi-core fiber 31. The multi-core fiber spatial coupling system 33 guides respective plural light beams, which are included in the group of rays of outgoing light beams from the first mode converter 15 and the group of outgoing light beams from the second light converging system 23, into a corresponding one or ones of a plurality of cores of the multi-core multi-mode fiber. An example of such an optical system is an optical system in the multi-core fiber coupling device disclosed in the Japanese Patent Application Laid Open No.2013-182222 publication.

According to the present invention, the multi-core fiber spatial coupling system 33 is configured to comprise, e.g. as illustrated in Fig. 1, a first relay lens to which a group of outgoing light beams from the first mode converter 15 are incident, and a beam splitter which guides light beams from the first relay lens and a group of outgoing light beams from the second light converging system 23 into the multi-core multi-mode fiber. An output from the beam splitter is propagated into the multi-mode fiber via a multi-mode fiber coupling lens, and respective ones of the group of light beams will be thus propagated into objective cores. The relay lens refers to a lens or a lens system for transmitting an image which has been formed at an optical system located forward towards further backward. Mismatch in size between a predetermined higher order mode in which multi light beams have been converted by the phase plate and the homogeneous mode in the fiber is optimized by means of the relay lens so that the maximum coupling efficiency can be provided.

As described above, light beams included in the group of outgoing light beams from the first fiber group 11 are simultaneously subjected to mode conversion at the first mode converter 15, thereby making it possible to easily attain multi-core multi-mode fiber coupling.

The light beams which have been emitted from the multi-core multi-mode fiber 31 are separated by a multi-core fiber coupling lens (multi-core fiber separation lens) 61 so that they are transmitted into a plurality of fibers 65 by means of an optical system 63.

The present invention also provides a multi-core multi-mode fiber coupling method using the above-described multi-core multi-mode fiber coupling device. This method comprises steps described below.

A group of outgoing light beams are emitted from the first fiber group 11. The group of outgoing light beams from the first fiber group 11 are converged by means of the first light converging system 13. The group of outgoing light beams from the first fiber group 11, which have been converged by means of the first light converging system 13, are subjected to mode conversion into the first mode by means of the first mode converter 15.

A group of outgoing light beams are emitted from the second fiber group 21. The group of outgoing light beams from the second fiber group 21 are converged by means of the second light converging system 23. The group of outgoing light beams from the first mode converter 15 and the group of outgoing light beams from the second light converging system 23 are guided into the multi-core fiber 31 by means of the multi-core fiber spatial coupling system 33.

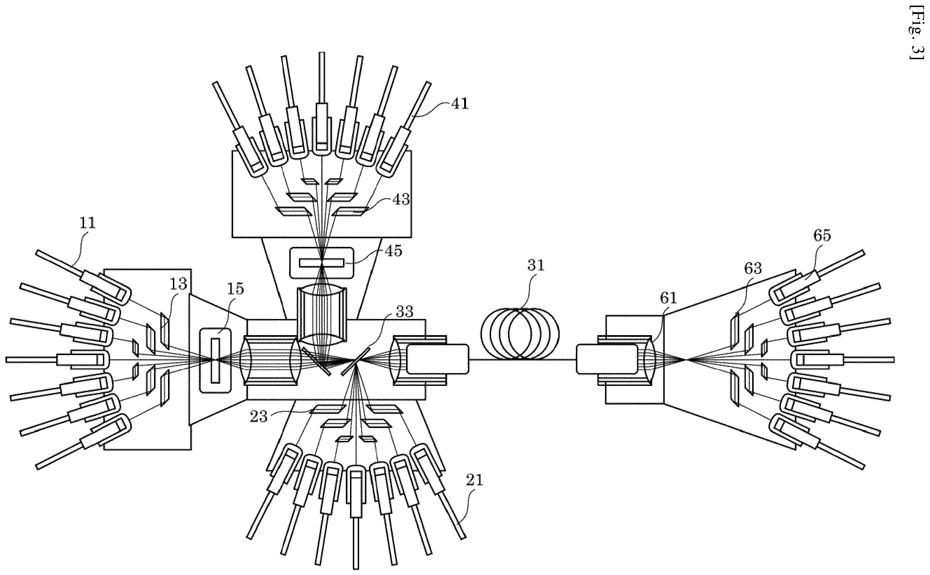

Fig. 3 is a block diagram illustrating a preferred example of the multi-core multi-mode coupling device. The example illustrated in Fig. 3 further comprises, in addition to the components of the previously mentioned multi-core multi-mode coupling device, a third group of fibers 41 which will be hereinafter simply referred to as a third fiber group 41, a third light converging system 43 and a second mode converter 45. By using the same principle as described above, it is possible to guide a group of light beams having a larger number of modes into the multi-core multi-mode fiber. The third light converging system 43 is an optical system for converging a group of outgoing light beams from the third fiber group 41. The second mode converter 45 is an optical device for converting the mode into a second mode of a group of outgoing light beams from the third fiber group 41, which have been converged by means of the third light converging system 43. The third fiber group 41, the third light converging system 43 and the second mode converter 45 have configurations similar to those of the first fiber group 11, the first light converging system 13 and the first mode converter 15, respectively.

In the case of this example, the multi-core fiber spatial coupling system 33 guides a group of outgoing light beams from the first mode converter 15, a group of outgoing light beams from the second light converging system 23, and a group of outgoing light beams from the second mode converter 45 into the multi-core fiber 31.

The present invention also provides a multi-core multi-mode fiber coupling method using the above-described multi-core multi-mode fiber coupling device. This method comprises steps described below.

A group of outgoing light beams are emitted from the first fiber group 11. The group of outgoing light beams from the first fiber group 11 are converged by means of the first light converging system 13. The group of outgoing light beams from the first fiber group 11, which have been converged by means of the first light converging system 13, are subjected to mode conversion into the first mode by means of the first mode converter 15.

A group of outgoing light beams are emitted from the second fiber group 21. The group of outgoing light beams from the second fiber group 21 are converged by means of the second light converging system 23.

A group of outgoing light beams are emitted from the third fiber group 41. The group of outgoing light beams from the third fiber group 41 are converged by means of the third light converging system 43. The group of outgoing light beams from the third fiber group 41, which have been converged by means of the third light converging system 43, are subjected to mode conversion into the second mode (the third mode when light beams of the second fiber group have been subjected to mode conversion into the second mode) by means of the second mode converter 45. The group of outgoing light beams from the first mode converter 15, the group of outgoing light beams from the second light converging system 23 and the group of outgoing light beams from the second mode converter 45 are guided into the multi-core fiber 31 by means of the multi-core fiber spatial coupling system 33.

### Industrial Applicability

The present invention can be utilized in the field of the optical fiber communication using spatial division multiplexing and multi-core multi-mode fiber.

### Description of reference numerals

11 .. First fiber group
13 ·· First light converging system
15 ·· First mode converter
21 ·· Second fiber group
23 ·· Second light converging system
31 ·· Multi-core fiber
33 ·· Multi-core fiber spatial coupling system
41 ·· Third fiber group
43 ·· Third light converging system
45 ·· Second mode converter
61 ·· Multi-core fiber coupling lens
63 ·· Optical system
65 .. Fiber

## Claims

1. A multi-core multi-mode fiber coupling device comprising:
a first group (11) of fibers;
a first light converging system (13) configured to converge a group of outgoing light beams from the first group (11) of fibers;
a first mode converter (15) configured to convert a mode of the group of outgoing light beams from the first group (11) of fibers, which has been converged by the first light converging system (13), into a first mode;
a second group (21) of fibers;
a second light converging system (23) configured to converge a group of outgoing light beams from the second group (21) of fibers; and
a spatial coupling system (33) for multi-core fiber, configured to guide a group of outgoing light beams from the first mode converter (15) and a group of outgoing light beams from the second light converging system (23) into a multi-core multi-mode fiber (31);
wherein the spatial coupling system (33) comprises:
a first relay lens configured to receive the group of outgoing light beams from the first mode converter (15),
a beam splitter configured to guide light beams from the first relay lens and the group of outgoing light beams from the second light converging system (23) into the multi-core multi-mode fiber (31), and
a multi-mode fiber coupling lens configured to propagate the output from the beam splitter into the multi-core multi-mode fiber (31).

2. The multi-core multi-mode fiber coupling device according to claim 1,
wherein the first mode converter (15) is a phase plate provided at a position in which a group of outgoing light beams from the first group (11) of fibers are allowed to coincide with each other by the first light converging system (13).

3. The multi-core multi-mode fiber coupling device according to claim 1, wherein the device further comprises:
a third group (41) of fibers;
a third light converging system (43) configured to converge a group of outgoing light beams from the third group (41) of fibers; and
a second mode converter (45) configured to convert a mode of the group of outgoing light beams from the third group (41) of fibers, which has been converged by means of the third light converging system (43), into a second mode,
wherein the spatial coupling system (33) for multi-core fiber is configured to guide a group of outgoing light beams from the first mode converter (15), a group of outgoing light beams from the second light converging system (23), and a group of outgoing light beams from the second mode converter (45) into the multi-core multi-mode fiber (31).

4. A multi-core multi-mode fiber coupling method comprising:
a step in which a group of outgoing light beams is emitted from a first group (11) of fibers;
a step in which the group of outgoing light beams from the first group (11) of fibers is converged by a first light converging system (13);
a step in which the group of outgoing light beams from the first group (11) of fibers, which has been converged by means of the first light converging system (13), is subjected to mode conversion into a first mode by a first mode converter (15);
a step in which a group of outgoing light beams is emitted from a second group (21) of fibers;
a step in which the group of outgoing light beams from the second group (21) of fibers is converged by a second light converging system (23); and
a step in which a group of outgoing light beams from the first mode converter (15) and a group of outgoing light beams from the second light converging system (23) are guided into a multi-core multi-mode fiber (31) by a spatial coupling system (33) for multi-core fiber;
wherein the spatial coupling system (33) comprises:
a first relay lens to which the group of outgoing light beams from the first mode converter (15) are incident,
a beam splitter which guides light beams from the first relay lens and the group of outgoing light beams from the second light converging system (23) into the multi-core multi-mode fiber (31), and
a multi-mode fiber coupling lens that propagates the output from the beam splitter into the multi-core multi-mode fiber (31).

## Patentansprüche

1. Multicore/Multimode-Faserkopplungsvorrichtung, die Folgendes umfasst:
eine erste Gruppe (11) von Fasern;
ein erstes Lichtbündelungssystem (13), konfiguriert zum Bündeln einer Gruppe von abgehenden Lichtstrahlen von der ersten Gruppe (11) von Fasern;
einen ersten Modenwandler (15), konfiguriert zum Umwandeln einer Mode der Gruppe von abgehenden Lichtstrahlen von der ersten Gruppe (11) von Fasern, die vom ersten Lichtbündelungssystem (13) gebündelt wurde, in eine erste Mode;
eine zweite Gruppe (21) von Fasern;
ein zweites Lichtbündelungssystem (23), konfiguriert zum Bündeln einer Gruppe von abgehenden Lichtstrahlen von der zweiten Gruppe (21) von Fasern; und
ein räumliches Kopplungssystem (33) für Multicore-Faser, konfiguriert zum Leiten einer Gruppe von abgehenden Lichtstrahlen vom ersten Modenwandler (15) und einer Gruppe von abgehenden Lichtstrahlen vom zweiten Lichtbündelungssystem (23) in eine Multicore/Multimode-Faser (31);
wobei das räumliche Kopplungssystem (33) Folgendes umfasst:
eine erste Relaislinse, konfiguriert zum Empfangen der Gruppe von abgehenden Lichtstrahlen vom ersten Modenwandler (15);
einen Strahlteiler, konfiguriert zum Leiten von Lichtstrahlen von der ersten Relaislinse und der Gruppe von abgehenden Lichtstrahlen vom zweiten Lichtbündelungssystem (23) in die Multicore/Multimode-Faser (31), und
eine Multimode-Faserkopplungslinse, konfiguriert zum Propagieren des Ausgangs vom Strahlteiler in die Multicore/Multimode-Faser (31).

2. Multicore/Multimode-Faserkopplungsvorrichtung nach Anspruch 1,
wobei der erste Modenwandler (15) eine Phasenplatte ist, die an einer Position vorgesehen ist, in der es das erste Lichtbündelungssystem (13) zulässt, dass eine Gruppe von abgehenden Lichtstrahlen von der ersten Gruppe (11) von Fasern miteinander übereinstimmt.

3. Multicore/Multimode-Faserkopplungsvorrichtung nach Anspruch 1,
wobei die Vorrichtung ferner Folgendes umfasst:
eine dritte Gruppe (41) von Fasern;
ein drittes Lichtbündelungssystem (43), konfiguriert zum Bündeln einer Gruppe von abgehenden Lichtstrahlen von der dritten Gruppe (41) von Fasern; und
einen zweiten Modenwandler (45), konfiguriert zum Umwandeln einer Mode der Gruppe von abgehenden Lichtstrahlen von der dritten Gruppe (41) von Fasern, die mittels des dritten Lichtbündelungssystems (43) umgewandelt wurde, in eine zweite Mode,
wobei das räumliche Kopplungssystem (33) für Multicore-Faser zum Leiten einer Gruppe von abgehenden Lichtstrahlen vom ersten Modenwandler (15), einer Gruppe von abgehenden Lichtstrahlen vom zweiten Lichtbündelungssystem (23) und einer Gruppe von abgehenden Lichtstrahlen vom zweiten Modenwandler (45) in die Multicore/Multimode-Faser (31) konfiguriert ist.

4. Multicore/Multimode-Faserkopplungsverfahren, das Folgendes beinhaltet:
einen Schritt, in dem eine Gruppe von abgehenden Lichtstrahlen von einer ersten Gruppe (11) von Fasern emittiert wird;
einen Schritt, in dem die Gruppe von abgehenden Lichtstrahlen von der ersten Gruppe (11) von Fasern von einem ersten Lichtbündelungssystem (13) gebündelt wird;
einen Schritt, in dem die Gruppe von abgehenden Lichtstrahlen von der ersten Gruppe (11) von Fasern, die vom ersten Lichtbündelungssystems (13) gebündelt wurde, einer Modenumwandlung in eine erste Mode durch einen ersten Modenwandler (15) unterzogen wird;
einen Schritt, in dem eine Gruppe von abgehenden Lichtstrahlen von einer zweiten Gruppe (21) von Fasern emittiert wird;
einen Schritt, in dem die Gruppe von abgehenden Lichtstrahlen von der zweiten Gruppe (21) von Fasern durch ein zweites Lichtbündelungssystem (23) gebündelt wird; und
einen Schritt, in dem eine Gruppe von abgehenden Lichtstrahlen vom ersten Modenwandler (15) und eine Gruppe von abgehenden Lichtstrahlen vom zweiten Lichtbündelungssystem (23) durch ein räumliches Kopplungssystem (33) für Multicore-Faser in eine Multicore/Multimode-Faser (31) geleitet werden;
wobei das räumliche Kopplungssystem (33) Folgendes umfasst:
eine erste Relaislinse, auf die die Gruppe von abgehenden Lichtstrahlen vom ersten Modenwandler (15) einfällt,
einen Strahlteiler, der Lichtstrahlen von der ersten Relaislinse und die Gruppe von abgehenden Lichtstrahlen vom zweiten Lichtbündelungssystem (23) in die Multicore/Multimode-Faser (31) leitet, und
eine Multimode-Faserkopplungslinse, die den Ausgang des Strahlteilers in die Multicore/Multimode-Faser (31) propagiert.

## Revendications

1. Dispositif de couplage de fibres multi-âmes multimodes, comprenant :
un premier groupe (11) de fibres ;
un premier système de convergence de lumière (13) configuré pour faire converger un groupe de faisceaux de lumière sortants en provenance du premier groupe (11) de fibres ;
un premier convertisseur de mode (15) configuré pour convertir, en un premier mode, un mode du groupe de faisceaux de lumière sortants en provenance du premier groupe (11) de fibres, qu'a fait converger le premier système de convergence de lumière (13) ;
un deuxième groupe (21) de fibres ;
un deuxième système de convergence de lumière (23) configuré pour faire converger un groupe de faisceaux de lumière sortants en provenance du deuxième groupe (21) de fibres ; et
un système de couplage spatial (33) pour fibre multi-âme, configuré pour guider dans une fibre multi-âme multimode (31) un groupe de faisceaux de lumière sortants en provenance du premier convertisseur de mode (15) et un groupe de faisceaux de lumière sortants en provenance du deuxième système de convergence de lumière (23) ;
le système de couplage spatial (33) comprenant :
une première lentille de relais configurée pour recevoir le groupe de faisceaux de lumière sortants en provenance du premier convertisseur de mode (15),
un séparateur de faisceau configuré pour guider dans la fibre multi-âme multimode (31) des faisceaux de lumière en provenance de la première lentille de relais et le groupe de faisceaux de lumière sortants en provenance du deuxième système de convergence de lumière (23), et
une lentille de couplage de fibre multimode configurée pour propager la sortie du séparateur de faisceau dans la fibre multi-âme multimode (31).

2. Dispositif de couplage de fibres multi-âmes multimodes selon la revendication 1,
dans lequel le premier convertisseur de mode (15) est une lame de phase située à une position où un groupe de faisceaux de lumière sortants en provenance du premier groupe (11) de fibres peuvent coïncider les uns avec les autres au moyen du premier système de convergence de lumière (13).

3. Dispositif de couplage de fibres multi-âmes multimodes selon la revendication 1,
le dispositif comprenant en outre :
un troisième groupe (41) de fibres ;
un troisième système de convergence de lumière (43) configuré pour faire converger un groupe de faisceaux de lumière sortants en provenance du troisième groupe (41) de fibres ; et
un second convertisseur de mode (45) configuré pour convertir, en un second mode, un mode du groupe de faisceaux de lumière sortants en provenance du troisième groupe (41) de fibres, qu'a fait converger le troisième système de convergence de lumière (43),
le système de couplage spatial (33) pour fibre multi-âme étant configuré pour guider dans la fibre multi-âme multimode (31) un groupe de faisceaux de lumière sortants en provenance du premier convertisseur de mode (15), un groupe de faisceaux de lumière sortants en provenance du deuxième système de convergence de lumière (23) et un groupe de faisceaux de lumière sortants en provenance du second convertisseur de mode (45).

4. Procédé de couplage de fibres multi-âmes multimodes, comprenant :
une étape où un groupe de faisceaux de lumière sortants est émis par un premier groupe (11) de fibres ;
une étape où un premier système de convergence de lumière (13) fait converger le groupe de faisceaux de lumière sortants en provenance du premier groupe (11) de fibres ;
une étape où le groupe de faisceaux de lumière sortants en provenance du premier groupe (11) de fibres, qu'a fait converger le premier système de convergence de lumière (13), est soumis à une conversion de mode en un premier mode par un premier convertisseur de mode (15) ;
une étape où un groupe de faisceaux de lumière sortants est émis par un deuxième groupe (21) de fibres ;
une étape où un deuxième système de convergence de lumière (23) fait converger le groupe de faisceaux de lumière sortants en provenance du deuxième groupe (21) de fibres ; et
une étape où un groupe de faisceaux de lumière sortants en provenance du premier convertisseur de mode (15) et un groupe de faisceaux de lumière sortants en provenance du deuxième système de convergence de lumière (23) sont guidés dans une fibre multi-âme multimode (31) par un système de couplage spatial (33) pour fibre multi-âme ;
le système de couplage spatial (33) comprenant :
une première lentille de relais, sur laquelle est incident le groupe de faisceaux de lumière sortants en provenance du premier convertisseur de mode (15),
un séparateur de faisceau qui guide dans la fibre multi-âme multimode (31) des faisceaux de lumière en provenance de la première lentille de relais et le groupe de faisceaux de lumière sortants en provenance du deuxième système de convergence de lumière (23), et
une lentille de couplage de fibre multimode qui propage la sortie du séparateur de faisceau dans la fibre multi-âme multimode (31).
